# EUROPÄISCHE PATENTSCHRIFT

(11) **EP 2 501 531 B1**
(45) Veröffentlichungstag und Bekanntmachung des Hinweises auf die Patenterteilung: **30.10.2019**
(21) Anmeldenummer: 10781620.9
(22) Anmeldetag: 18.11.2010
(51) Int. Cl.: B29B 9/06

(54) **VORRICHTUNG ZUM GRANULIEREN**
APPARATUS FOR GRANULATION
APPAREIL POUR GRANULER

(30) Priorität: 20.11.2009 DE 202009015876 U
(43) Veröffentlichungstag der Anmeldung: 26.09.2012
(73) Patentinhaber: Maag Automatik GmbH, 63762 Großostheim (DE)
(72) Erfinder: DAHLHEIMER, Stefan, 63801 Kleinostheim (DE)
(74) Vertreter: Spranger, Stephan
(86) Internationale Anmeldenummer: PCT/EP2010/007017
(87) Internationale Veröffentlichungsnummer: WO 2011/060938

(56) Entgegenhaltungen:
- DE-A1- 2 813 332
- GB-A- 1 514 160
- US-A- 5 629 028
- US-A1- 2009 206 507

## Beschreibung

Die Erfindung betrifft eine Vorrichtung zum Granulieren von aus Düsen in einer Lochplatte austretender Schmelze z.B. aus thermoplastischem Kunststoffmaterial, wobei der Lochplatte eine Messeranordnung mit zumindest einem Messer, angetrieben von einem Motor, gegenüberliegt, so dass das zumindest eine Messer die Düsen in der Lochplatte überstreicht und dabei Granulatkörner des austretenden Materials abtrennt, wobei die Vorrichtung ein Gehäuse aufweist, welches an die Lochplatte anschließt, zumindest das zumindest eine Messer der Messeranordnung umgibt und von einem Kühlmedium, z.B. ein Kühlfluid wie etwa Wasser, durchströmt ist, und wobei an dem Gehäuse ein Einlass für das Kühlmedium und ein Auslass für das Kühlmedium und die darin befindlichen Granulatkömer vorgesehen ist, gemäß dem Oberbegriff des Anspruchs 1.

Entsprechende Vorrichtungen, welche beispielsweise Verfahren zur Unterwassergranulierung ausführen, sind als Unterwassergranulierungsanlagen beispielsweise unter der Produktbezeichnung SPHERO® vom Unternehmen Automatik Plastics Machinery GmbH bekannt.

Insbesondere bei der Unterwassergranulierung von Kunststoffmaterialien, welche zum Verkleben neigen, wie etwa TPE, TPU oder ähnliche, kommt der Führung des Kühlmediums sowohl beim Zuströmen zum Gehäuse, beim Durchströmen des Gehäuses als auch beim Abströmen vom Gehäuse einer Granulierungsanlage eine entscheidende Bedeutung zu. Zum einen soll die Führung des Kühlmediums dabei möglichst effektiv ohne allzu große Verwirbelungen erfolgen, zum anderen soll das Kühlmedium mit den nach erfolgter Granulation darin enthaltenen Granulatkörnern so weitergeführt werden, dass ein Verklumpen durch Aneinanderkleben der Granulatkörner vermieden werden kann. Die Granulatkömer sollen dabei möglichst rasch und zuverlässig abgeführt werden können.

Das Europäische Patent EP 1 218 156 B1 beschreibt einen Unterwassergranulator, bei welchem in dem dort als Wasserkasten bezeichneten Gehäuse eine zusätzliche Wasserstromführung angebracht ist, um den Wasser- und Granulatstrom durch den Wasserkasten zu leiten.

Die Schrift US-A-2009/206507 beschreibt eine Vorrichtung zum Granulieren zur Durchführung einer Unterwassergranulierung gemäß dem Oberbegriff des Anspruchs 1. Der Einlass zum Zutritt eines Kühlmediums zum dortigen Gehäuse ist in der unteren Hälfte des Gehäuses angeordnet und der Auslass ist in der oberen Hälfte des dortigen Gehäuses angeordnet.

Das Patent US 5,629,028 beschreibt eine Unterwassergranuliervorrichtung, bei welcher ein Auslass aus dem Gehäuse tangential vorgesehen ist. Eine längere gradlinige Abführung des Auslasskanals dort ist allerdings nicht beschrieben.

Es ist somit die Aufgabe der vorliegenden Erfindung, eine Vorrichtung zum Granulieren von aus Düsen in einer Lochplatte austretendem Material vorzusehen, welche auf konstruktiv einfache Art und Weise eine effiziente Granulierung bei gleichzeitig zuverlässigem und raschem Transport von mit einer solchen Vorrichtung hergestellten Granulatkörnern ermöglicht.

Diese Aufgabe wird erfindungsgemäß gelöst mit einer Vorrichtung zum Granulieren von aus Düsen in einer Lochplatte austretendem thermoplastischem Kunststoffmaterial mit den Merkmalen gemäß Anspruch 1. Bevorzugte Ausführungsformen der Erfindung sind in den abhängigen Ansprüchen definiert.

Die erfindungsgemäße Vorrichtung dient zum Granulieren von aus Düsen in einer Lochplatte austretender Schmelze, z.B. aus thermoplastischem Kunststoffmaterial. Der Lochplatte liegt eine Messeranordnung mit zumindest einem Messer, angetrieben von einem Motor, gegenüber, so dass das zumindest eine Messer die Düsen in der Lochplatte überstreicht und dabei Granulatkömer des austretenden Schmelzematerials abtrennt. Die erfindungsgemäße Vorrichtung weist ein Gehäuse auf, welches an die Lochplatte anschließt, zumindest das zumindest eine Messer der Messeranordnung umgibt und von einem Kühlmedium durchströmt ist, wobei an dem Gehäuse ein Einlass für das Kühlmedium und ein Auslass für das Kühlmedium und die sich darin befindenden Granulatkömer vorgesehen ist. Erfindungsgemäß ist der Einlass nur in der unteren Hälfte des Gehäuses angeordnet und weist eine Einlassöffnung in dem Gehäuse und einen zum Gehäuse hinführend angeordneten Einlasskanal auf. Der Einlasskanal kann bevorzugt geradlinig oder im Wesentlichen geradlinig verlaufend (siehe dazu auch die entsprechenden Angaben zum Auslass) angeordnet sein. Der Auslass ist erfindungsgemäß in der oberen Hälfte des Gehäuses angeordnet und weist eine Auslassöffnung in dem Gehäuse und einen tangential vom Gehäuse wegführend angeordneten Auslasskanal auf, wobei der Auslasskanal über eine Länge von mindestens dem Doppelten des größten Innendurchmessers des Querschnitts des Gehäuses geradlinig oder im Wesentlichen geradlinig verläuft. Der Ausdruck "im Wesentlichen geradlinig" bezieht sich dabei auf im Folgenden noch näher zu beschreibende Ausführungsformen der Erfindung mit gewissen Biegungen bzw. Abwinkelungen der Kanäle, welche dort im Folgenden hinsichtlich der Abmessungen noch genauer definiert werden.

Durch die erfindungsgemäße Gestaltung des Einlasses und des Auslasses kann auf konstruktiv einfache Art und Weise eine effiziente Granulierung bei gleichzeitig zuverlässigem und raschem Transport von im Kühlmedium befindlichen Granulatkörnern erreicht werden. Dabei ermöglicht der tangential vom Gehäuse wegführend angeordnete Auslasskanal, dass die dortige Strömung des Kühlmediums mit den darin befindlichen Granulatkörnern nicht wesentlich eingeschnürt ist und somit der Austrittsquerschnitt nicht wesentlich verengt ist. Die dort im Kühlmedium sich befindenden Granulatkörner werden damit nicht an eine Wandung des Auslasses mit der erfindungsgemäßen Auslassöffnung und dem erfindungsgemäßen Auslasskanal zusammengedrängt, und die Gefahr einer Berührung der Granulatkömer untereinander, was insbesondere bei zum Verkleben neigenden Kunststoffmaterialien zum Verkleben der Granulatkömer führen kann, wird dadurch deutlich verringert bzw. sogar völlig vermieden. Die Gestaltung des Einlasses mit der erfindungsgemäßen Einlassöffnung und dem erfindungsgemäßen Einlasskanal bietet eine verbesserte, störungsfreie Zuströmung des Kühlmediums zu dem Gehäuse, was die Strömungsverhältnisse in dem Gehäuse gleichmäßiger und somit auch besser kontrollierbar macht. Eine effiziente Granulierung ist somit aufgrund der verbesserten definierten Strömungsverhältnisse erfindungsgemäß möglich, wobei dadurch auch die Verweilzeit der Granulatkörner in dem Gehäuse einheitlicher wird, was zur Vereinheitlichung und Verbesserung der Qualität der erzeugten Granulatkömer beiträgt. Die statistische Gauß- Verteilung der Verweilzeiten der Granulatkömer wird durch die aufgrund der erfindungsgemäßen Gestaltung definierten Strömungsverhältnisse enger. Erfindungsgemäß können ferner durch die sich ergebenden gleichmäßigen Zwangsströmungsbedingungen speziell zur Lochplatte hin tote Zonen, in welchen keine oder nur eine geringe Strömung des Kühlmediums auftritt und somit die Gefahr des Verklumpens von im Kühlmedium sich befindenden Granulatkörnern höher ist, zuverlässig vermieden werden. Generell führt dies alles erfindungsgemäß auch zu einem verringerten Verschleiß der Messeranordnung und zu einer möglichen Verringerung der für den Antrieb der Messeranordnung nötigen Antriebsenergie.

Erfindungsgemäß ist die Einlassöffnung in Längsrichtung des Gehäuses gesehen in einem hinteren Bereich des Gehäuses in einem der Lochplatte abgewandten Bereich angeordnet ist und die Auslassöffnung ist in einem in Längsrichtung des Gehäuses gesehenen vorderen Bereich des Gehäuses im Bereich der Bewegung des zumindest einen Messers bei der Lochplatte angeordnet.

Bevorzugt kann der Einlasskanal tangential zum Gehäuse hinführend angeordnet sein. Somit kann sich erfindungsgemäß bevorzugt eine gerichtete Strömung in dem Gehäuse leichter aufbauen, wobei sofort bei Eintritt des Wassers in das Gehäuse, welches bevorzugt einen kreisförmigen bzw. im Wesentlichen kreisförmigen Querschnitt aufweisen kann, ein rotierender Wirbel des Kühlmediums erzeugt wird, welcher schon beim Anfahrvorgang der erfindungsgemäßen Vorrichtung gegebenenfalls die sich noch in dem Gehäuse befindliche Luft leicht herausbefördert. Im Betrieb der so bevorzugt gestalteten erfindungsgemäßen Vorrichtung kann die entsprechend gerichtete Strömung in dem Gehäuse die Gefahr des Verklebens der Granulatkörner in dem Kühlmedium weiter zusätzlich verringern.

Um die gerichtete Wirbelströmung in dem Gehäuse noch weiter verbessern zu können und um die Granulierung dadurch noch effizienter zu gestalten, wobei gleichzeitig die Gefahr des Verklebens der Granulatkömer in dem Kühlmedium durch die entsprechenden eingestellten gleichmäßigen Strömungsverhältnisse weiter verringert werden kann, ist der Auslass am Gehäuse in einem vorderen Bereich des Gehäuses im Bereich der Bewegung des zumindest einen Messers bei der Lochplatte angeordnet und der Einlass am Gehäuse kann in Längsrichtung des Gehäuses gesehen in einem hinteren Bereich des Gehäuses in einem der Lochplatte abgewandten Bereich angeordnet. Die sich so im Strömungswirbel von dem hinteren Bereich zum vorderen Bereich ergebende Strömung des Kühlmediums ist besonders gleichmäßig und frei von schädlichen zusätzlichen Verwirbelungen in dem Gehäuse. Somit können die im vorderen Bereich des Gehäuses erzeugten Granulatkörner rasch im Kühlmedium über den Auslass abgeführt werden ohne wesentliche Rückströmung in den hinteren Teil des Gehäuses, welche ansonsten zu einem Verklumpen der Granulatkörner in dem Kühlmedium führen könnte.

Besonders gleichmäßige Strömungsverhältnisse ergeben sich dann, wenn der Einlass und der Auslass im Querschnitt des Gehäuses gesehen auf der gleichen Seite angeordnet sind. Somit kann sich die vorteilhaft ausbildende Wirbelströmung ohne wesentliche zusätzliche Umlenkung der Strömung vom Einlass zum Auslass besonders zuverlässig ausbilden.

Bevorzugt kann der Auslasskanal im Bereich des geradlinigen oder im Wesentlichen geradlinigen Verlaufs eine Krümmung mit einem Krümmungswinkel von weniger als 30 Grad, besonders bevorzugt von weniger als 15 Grad, gemessen zwischen Mittelachse des Anfangsbereichs des geradlinigen oder im Wesentlichen geradlinigen Verlaufs des Auslasskanals und Mittelachse des Endbereichs des geradlinigen oder im Wesentlichen geradlinigen Verlaufs des Auslasskanals, aufweisen. Der Auslasskanal kann bei dieser Gestaltung ein Verkleben der Granulatkörner im Kühlmedium besonders zuverlässig verhindern, da somit gar keine oder nur wie angegeben entsprechend geringe Änderungen der Richtung des Stroms des Kühlmediums mit den darin befindlichen Granulatkörnem bei dem so erfindungsgemäß bevorzugt gestalteten Auslasskanal vorliegen.

Das Verkleben der Granulatkörner in dem Kühlmedium kann im Bereich des Auslasses weiter dadurch verringert werden, dass der Auslasskanal über die Länge des geradlinigen oder im Wesentlichen geradlinigen Verlaufs bevorzugt einen konstanten Querschnitt aufweist.

Um eine flexible Anpassung an bestimmte zu granulierende Materialien beispielsweise hinsichtlich des Durchsatzes oder der Strömungsgeschwindigkeit des Kühlmediums vorzusehen und dabei dennoch die Gefahr des Verklumpens von Granulatkörnern durch Verkleben in dem Kühlmedium so gering wie möglich zu halten, kann der Auslasskanal über die Länge des geradlinigen oder im Wesentlichen geradlinigen Verlaufs eine oder mehrere Querschnittsänderungen aufweisen, wobei eine Aufweitung oder Verengung des Querschnitts über die Länge der Querschnittsänderungen jeweils einen Öffnungswinkel von weniger als 15 Grad bezogen auf die dortige Mittelachse des Auslasskanals aufweisen kann.

Je nach zu granulierendem Material ist es vorteilhaft, wenn gemäß einer bevorzugten Ausführungsform der Erfindung die Länge des geradlinigen oder im Wesentlichen geradlinigen Verlaufs des Auslasskanals mindestens das zehnfache des lokalen Durchmessers des Auslasskanals an der jeweiligen Stelle beträgt. Somit kann eine verengungsfreie bzw. im Wesentlichen verengungsfreie (siehe oben), ausreichend lange Kühlstrecke für die in dem Kühlmedium sich befindlichen Granulatkömer im Auslasskanal vorgesehen sein, welche keine Behinderungen der dortigen Strömung bietet, was ansonsten die Gefahr des Verklumpens der in Abkühlung sich befindenden Granulatkömer in dem Kühlmedium dort ergeben könnte.

Die Erfindung wird im Folgenden anhand der beigefügten Figuren näher beispielhaft erläutert. Es zeigen:
- Fig. 1: eine schematische Draufsicht auf eine Vorrichtung gemäß einer bevorzugten Ausführungsform der Erfindung;
- Fig. 2: eine schematische Draufsicht auf eine Vorrichtung gemäß einer weiteren bevorzugten Ausführungsform der Erfindung; und
- Fig. 3: eine schematische Schnittansicht einer Vorrichtung gemäß einer bevorzugten Ausführungsform der Erfindung, aufgenommen entlang des Schnitts A-A in Fig. 1.

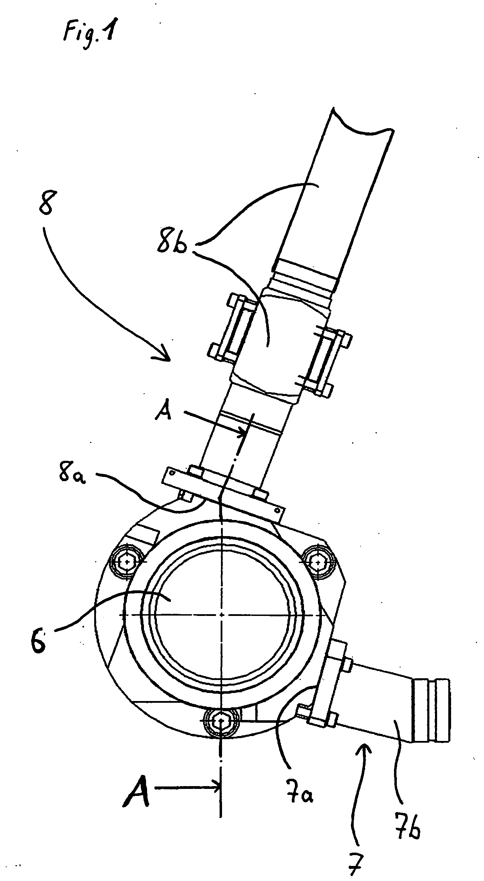

Die Fig. 1 zeigt eine schematische Draufsicht auf eine Vorrichtung zum Granulieren von aus Düsen in einer Düsenplatte austretendem thermoplastischem Kunststoffmaterial gemäß einer bevorzugten Ausführungsform der Erfindung.

In Fig. 1 zu sehen ist das Gehäuse 6 der Vorrichtung, welches von einem Kühlmedium durchströmt ist, wobei an dem Gehäuse 6 ein Einlass 7 für das Kühlmedium und ein Auslass 8 für das Kühlmedium und die darin befindlichen Granulatkörner vorgesehen ist. Der Einlass 7 ist erfindungsgemäß in der unteren Hälfte des Gehäuses 6 angeordnet, bevorzugt beispielsweise in einer Position zwischen vier und fünf Uhr. Der Einlass 7 weist eine Einlassöffnung 7a in dem Gehäuse und einen zum Gehäuse 6 hinführend angeordneten Einlasskanal 7b auf, wobei der Einlasskanal 7b in der i Fig. 1 gezeigten bevorzugten Ausführungsform gradlinig und tangential zum Gehäuse 6 hinführend angeordnet ist. Erfindungsgemäß ist ferner der Auslass 8 in der oberen Hälfte des Gehäuses 6 angeordnet, bevorzugt in einer Position zwischen zehn und zwei Uhr. Der erfindungsgemäße Auslass 8 weist eine Auslassöffnung 8a in dem Gehäuse 6 und einen tangential vom Gehäuse 6 wegführend angeordneten Auslasskanal 8b auf, wobei der Auslasskanal 8b über eine Länge von mindestens dem Doppelten des größten Innendurchmessers des Querschnitts des Gehäuses 6 geradlinig verläuft. Die Länge des geradlinigen Verlaufs des Auslasskanals 8b beträgt außerdem mindestens das zehnfache des lokalen Durchmessers des Auslasskanals 8b am entsprechenden Ort des Auslasskanals 8b. Die Länge kann aufgrund der Übersichtlichkeit der Fig. 1 dort nicht vollständig wiedergegeben werden und erstreckt sich entsprechend noch weiter über die in der Fig. 1 dargestellte Länge hinaus.

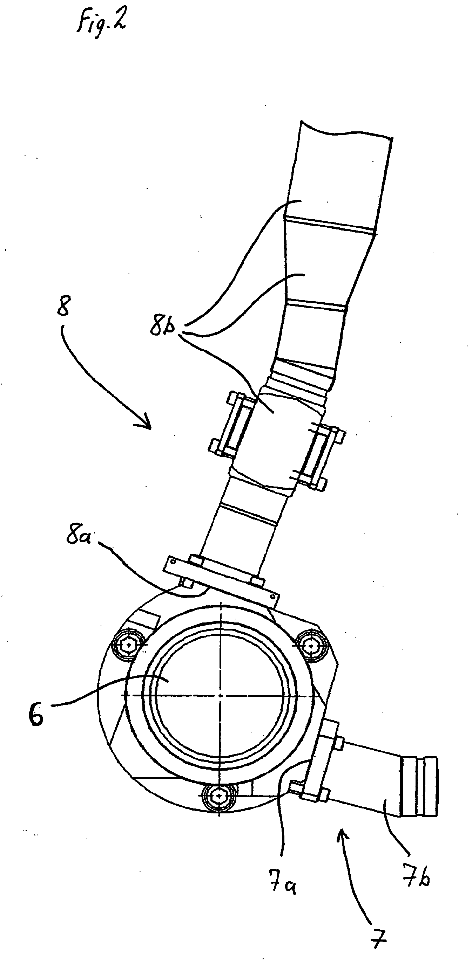

Die Fig. 2 zeigt eine schematische Draufsicht auf eine Vorrichtung zum Granulieren gemäß einer weiteren bevorzugten Ausführungsform der Erfindung. Die in Fig. 2 dargestellte Ausführungsform der Erfindung unterscheidet sich von der in Fig. 1 dargestellten Ausführungsform der Erfindung lediglich dadurch, dass in Fig. 2 der Auslasskanal 8b nicht vollständig geradlinig, sondern im Wesentlichen geradlinig verläuft. Dabei weist der Auslasskanal 8b gemäß der Darstellung der Fig. 2 im Bereich des im Wesentlichen geradlinigen Verlaufs eine Krümmung mit einem Krümmungswinkel von etwa 10 Grad auf, gemessen zwischen einer Mittelachse des Anfangsbereichs des geradlinigen oder im Wesentlichen geradlinigen Verlaufs des Auslasskanals 8b (im Bereich in der Nähe der Auslassöffnung 8a) und einer Mittelachse des Endbereichs des im Wesentlichen geradlinigen Verlaufs des Auslasskanals 8b im oberen Bereich der Darstellung der Fig. 2. Gemäß der Darstellung der Fig. 2 weist der dortige Auslasskanal 8b außerdem über die Länge seines im Wesentlichen geradlinigen Verlaufs beispielhaft eine Querschnittsänderung auf, nämlich eine Aufweitung des Querschnitts, wobei über die Länge der Querschnittsänderung der Öffnungswinkel des Auslasskanals 8b dort gemäß der Darstellung der Fig. 2 etwa 10 Grad beträgt, bezogen auf die dortige Mittelachse des Auslasskanals 8b.

Wie sowohl in der Darstellung der Fig. 1 als auch in der Darstellung der Fig. 2 zu sehen ist, befinden sich in beiden gezeigten bevorzugten Ausführungsformen der Erfindung der Einlass 7 und der Auslass 8 im Querschnitt des Gehäuses 6 gesehen auf der gleichen Seite einer imaginären, in den Figuren schräg in der Zeichenebene verlaufenden Symmetrieachse des Gehäuses 6, d.h. der Einlass 7 und der Auslass 8 liegen nicht punktsymmetrisch um eine aus der Zeichenebene herausragende Symmetrieachse im Zentrum des Gehäuses mit kreisförmigem Querschnitt sondern auf der gleichen Seite einer Strömrichtung eines Wirbelstroms in dem Gehäuse 6 bzw. einer entsprechenden Abströmrichtung am Auslass 8.

Generell bezeichnen in den Figuren gleiche Bezugszeichen gleiche Elemente der Vorrichtung. Die zu einzelnen Figuren bzw. den dortigen Elementen gemachten Angaben gelten, soweit nicht anders angegeben, auch bezüglich den übrigen Figuren und den dort entsprechend gezeigten Elementen Solche Angaben werden nicht nochmals wiederholt.

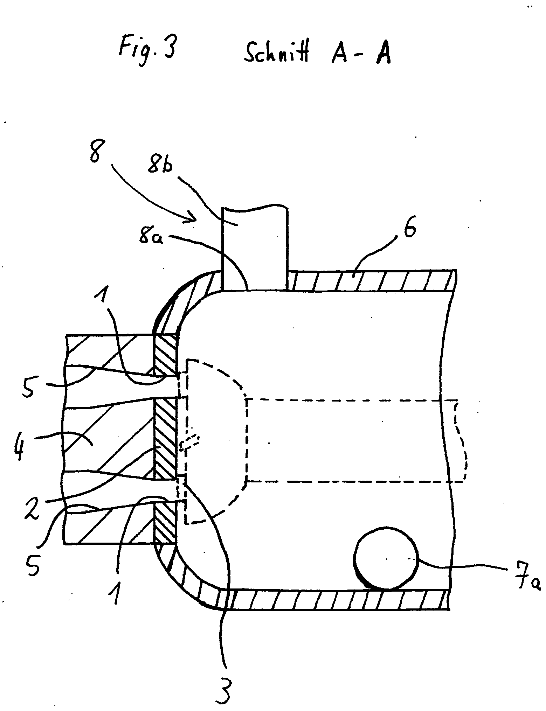

Die Fig. 3 zeigt in einer schematischen Schnittansicht eine Vorrichtung gemäß einer bevorzugten Ausführungsform der Erfindung, aufgenommen entlang des Schnittes A-A in Fig. 1. In der schematischen Schnittansicht der Fig. 3 ist die erfindungsgemäße Vorrichtung zum Granulieren von aus Düsen 1 in einer Lochplatte 2 austretendem Schmelzematerial zu sehen. Die Schmelze, z.B. des thermoplastischen Kunststoffmaterials, wird über einen Schmelzeverteilerkörper 4 mit darin befindlichen Schmelzekanälen 5 den Düsen 1 der Lochplatte 2 zugeführt. Der Lochplatte 2 liegt eine Messeranordnung mit zumindest einem Messer 3, angetrieben von einem Motor (nicht gezeigt), gegenüber. Die Messeranordnung ist gestrichelt dargestellt. Dabei überstreicht das zumindest eine Messer 3 die Düsen 1 in der Lochplatte 2 und trennt dabei im Produktionsvorgang Granulatkömer des austretenden Schmelzematerials ab. Die Vorrichtung weist das Gehäuse 6 auf, welches an die Lochplatte 2 anschließt, zumindest das zumindest eine Messer 3 der Messeranordnung umgibtund von dem Kühlmedium durchströmt ist, wobei an dem Gehäuse 6 der erfindungsgemäße Einlass 7 für das Kühlmedium und der erfindungsgemäße Auslass 8 für das Kühlmedium und die darin befindlichen Granulatkörner vorgesehen ist. Wie in Fig. 3 zu sehen, ist der Einlass 7 nur in der unteren Hälfte des Gehäuses 6 angeordnet mit einer Einlassöffnung 7a in dem Gehäuse 6, wobei der Einlass am Gehäuse in Längsrichtung des Gehäuses 6 gesehen in einem hinteren Bereich des Gehäuses 6 in einem der Lochplatte 2 abgewandten Bereich angeordnet ist. Der Auslass 8 ist in der oberen Hälfte des Gehäuses 6 angeordnet und weist eine Auslassöffnung 8a in dem Gehäuse 6 und einen tangential vom Gehäuse 6 wegführend angeordneten Auslasskanal 8b auf, wobei der Auslasskanal 8b über die Länge von mindestens dem Doppelten des größten Innendurchmessers des Querschnitts des Gehäuses 6 geradlinig oder im Wesentlichen geradlinig verläuft, was in Fig. 3 nur angedeutet ist, da die Länge des Auslasskanals 8b in der Figur nicht vollständig darstellbar ist. Der Auslass 8 ist gemäß der in Fig. 3 gezeigten Ausführungsform der Erfindung am Gehäuse 6 in einem in Längsrichtung des Gehäuses 6 gesehenen vorderen Bereich des Gehäuses 6 im Bereich der Bewegung des zumindest einen Messers 3 bei der Lochplatte 2 angeordnet.

Mit der erfindungsgemäßen Vorrichtung kann auf konstruktiv einfache Weise eine effiziente Granulierung bei gleichzeitig zuverlässigem und raschem Transport der Granulatkörner in dem Kühlmedium erreicht werden, wobei insbesondere zuverlässig ein Verkleben der Granulatkörner in dem Kühlmedium vermieden werden kann.

## Patentansprüche

1. Vorrichtung zum Granulieren von aus Düsen (1) in einer Lochplatte (2) austretender Schmelze, wobei der Lochplatte (2) eine Messeranordnung mit zumindest einem Messer (3), angetrieben von einem Motor, gegenüberliegt, so dass das zumindest eine Messer (3) die Düsen (1) in der Lochplatte (2) überstreicht und dabei Granulatkörner des austretenden Schmelzematerials abtrennt, wobei die Vorrichtung ein Gehäuse (6) aufweist, welches an die Lochplatte (2) anschließt, zumindest das zumindest eine Messer (3) der Messeranordnung umgibt und von einem Kühlmedium durchströmt ist, und wobei an dem Gehäuse (6) ein Einlass (7) für das Kühlmedium und ein Auslass (8) für das Kühlmedium und die darin befindlichen Granulatkörner vorgesehen ist,
wobei
der Einlass (7) nur in der unteren Hälfte des Gehäuses (6) angeordnet ist und eine Einlassöffnung (7a) in dem Gehäuse (6) und einen zum Gehäuse (6) hinführend angeordneten Einlasskanal (7b) aufweist, und der Auslass (8) in der oberen Hälfte des Gehäuses (6) angeordnet ist und eine Auslassöffnung (8a) in dem Gehäuse (6) und einen Auslasskanal (8b) aufweist, wobei der Auslasskanal (8b) über eine Länge von mindestens dem Doppelten des größten Innendurchmessers des Querschnitts des Gehäuses (6) gradlinig oder im Wesentlichen gradlinig verläuft,
**dadurch gekennzeichnet, dass**
der Auslasskanal (8b) tangential vom Gehäuse (6) wegführt und dass die Einlassöffnung (7a) in Längsrichtung des Gehäuses (6) gesehen in einem hinteren Bereich des Gehäuses (6) in einem der Lochplatte (2) abgewandten Bereich angeordnet ist und die Auslassöffnung (8a) in einem in Längsrichtung des Gehäuses (6) gesehenen vorderen Bereich des Gehäuses (6) im Bereich der Bewegung des zumindest einen Messers (3) bei der Lochplatte (2) angeordnet ist.

2. Vorrichtung nach Anspruch 1, **dadurch gekennzeichnet, dass** der Einlasskanal (7b) tangential zum Gehäuse (6) hinführend angeordnet ist.

3. Vorrichtung nach einem der Ansprüche 1 bis 2, **dadurch gekennzeichnet, dass** der Einlass (7) und der Auslass (8) im Querschnitt des Gehäuses (6) gesehen auf der gleichen Seite angeordnet sind.

4. Vorrichtung nach einem der Ansprüche 1 bis 3, **dadurch gekennzeichnet, dass** der Auslasskanal (8b) im Bereich des gradlinigen oder im Wesentlichen gradlinigen Verlaufs eine Krümmung mit einem Krümmungswinkel von weniger als 30° , bevorzugt von weniger als 15°, gemessen zwischen Mittelachse des Anfangsbereichs des gradlinigen oder im Wesentlichen gradlinigen Verlaufs des Auslasskanals (8b) und Mittelachse des Endbereichs des gradlinigen oder im Wesentlichen gradlinigen Verlaufs des Auslasskanals (8b), aufweist.

5. Vorrichtung nach einem der Ansprüche 1 bis 4, **dadurch gekennzeichnet, dass** der Auslasskanal (8b) über die Länge des gradlinigen oder im Wesentlichen gradlinigen Verlaufs einen konstanten Querschnitt aufweist.

6. Vorrichtung nach einem der Ansprüche 1 bis 4, **dadurch gekennzeichnet, dass** der Auslasskanal (8b) über die Länge des gradlinigen oder im Wesentlichen gradlinigen Verlaufs eine oder mehrere Querschnittänderung(en) aufweist, wobei eine Aufweitung oder Verengung des Querschnitts über die Länge der Querschnittänderung(en) jeweils einen Öffnungswinkel von weniger als 15°, bezogen auf die dortige Mittelachse des Auslasskanals (8b) aufweist.

7. Vorrichtung nach einem der Ansprüche 1 bis 6, **dadurch gekennzeichnet, dass** die Länge des gradlinigen oder im Wesentlichen gradlinigen Verlaufs des Auslasskanals (8b) mindestens das zehnfache des lokalen Durchmessers des Auslasskanals (8b) beträgt.

## Claims

1. A device for pelletising melt emerging from apertures (1) in a die plate (2), wherein said die plate (2) is facing a blade arrangement with at least one blade (3), driven by a motor, such that the at least one blade (3) sweeps over the apertures (1) in the die plate (2) and thereby separates pellets of the emerging melt material, wherein said device features a housing (6) which is connected to the die plate (2) and surrounds at least one blade (3) of the blade arrangement and around which a cooling agent flows, wherein said housing (6) features an inlet (7) for the cooling agent and an outlet (8) for the cooling agent and the pellets contained therein,
wherein
the inlet (7) is arranged only in the lower half of the housing (6) and features an inlet port (7a) in the housing (6) and an inlet duct (7b) arranged so as to lead to the housing (6), and the outlet (8) is arranged in the upper half of the housing (6) and features an outlet port (8a) in the housing (6) and an outlet duct (8b), wherein said outlet duct (8b) is arranged linearly or substantially linearly with a length at least twice the greatest internal diameter of the cross section of the housing (6),
**characterised in that**
the outlet duct (8b) is arranged so as to lead tangentially away from the housing (6) and that wherein said inlet duct (7a) is arranged in a rear region of the housing (6), seen in the longitudinal direction of the housing (6), in a region facing away from the die plate (2) and said outlet duct (8a) being arranged in a front region of the housing (6), seen in the longitudinal direction of the housing (6), in the region of movement of the at least one blade (3) next to the die plate (2).

2. Device according to Claim 1, **characterised in that** the inlet duct (7b) is arranged so as to lead tangentially to the housing (6).

3. Device according to one of Claims 1 to 2, **characterised in that** the inlet (7) and the outlet (8) are arranged on the same side when seen in the cross section of the housing (6).

4. Device according to one of Claims 1 to 3, **characterised in that** the outlet duct (8b) features a curve in the region of its linear or substantially linear course with an angle of curvature less than 30°, preferably less than 15°, measured between the central axis of the region where the linear or substantially linear course of the outlet duct (8b) begins and the central axis of the region where the linear or substantially linear course of the outlet duct (8b) ends.

5. Device according to one of Claims 1 to 4, **characterised in that** the outlet duct (8b) features a constant cross section along the length of its linear or substantially linear course.

6. Device according to one of Claims 1 to 4, **characterised in that** the outlet duct (8b) features one or more changes in cross section along the length of its linear or substantially linear course, wherein any widening or narrowing of the cross section has an opening angle of less than 15°, measured from the central axis of the outlet duct (8b) at that point.

7. Device according to one of Claims 1 to 6, **characterised in that** the length of the linear or substantially linear course of the outlet duct (8b) is at least ten times the local diameter of the outlet duct (8b).

## Revendications

1. Dispositif de granulation de matière fondue extrudée à partir de buses (1) dans une plaque perforée (2), ladite plaque perforée (2) étant placée face à un ensemble de lames comprenant au moins une lame (3) actionné par un moteur de sorte que la ou les lames (3) balaie les buses (1) dans la plaque perforée (2) et sépare ce faisant des granulats du matériau en fusion extrudé, le dispositif présentant un boîtier (6) accolé à la plaque perforée (2) qui entoure au moins la ou les lames (3) de l'ensemble de lames et qui est parcouru par un fluide de refroidissement et ledit boîtier (6) étant doté d'une admission (7) pour le fluide de refroidissement et d'une évacuation (8) pour le fluide de refroidissement et les granulats qui s'y trouvent,
et
l'admission (7) étant uniquement disposée dans la moitié inférieure du boîtier (6) et présentant un orifice d'admission (7a) dans le boîtier (6), ainsi qu'un conduit d'admission (7b) conduisant au boîtier (6), tandis que l'évacuation (8) est disposée dans la moitié supérieure du boîtier (6) et présente un orifice d'évacuation (8a) dans le boîtier (6) et un conduit d'évacuation (8b), ledit conduit d'évacuation (8b) étant rectiligne ou sensiblement rectiligne sur une longueur égale à au moins le double du plus grand diamètre intérieur de la section du boîtier (6)
**caractérisé en ce que**
le conduit d'évacuation (8b) s'éloigne tangentiellement du boîtier (6) et ledit orifice d'admission (7a) étant disposé dans une partie arrière du boîtier (6) vu dans le sens longitudinal, éloignée de la plaque perforée (2), tandis que ledit orifice d'évacuation (8a) est disposé dans une partie avant du boîtier (6) vu dans le sens longitudinal, dans la zone de balayage de la ou des lames (3) à proximité de la plaque perforée (2).

2. Dispositif conforme à la revendication 1 **caractérisé par** la disposition tangentielle par rapport au boîtier (6) du conduit d'admission (7b) y conduisant.

3. Dispositif conforme à l'une des revendications 1 à 2, **caractérisé par** la disposition du même côté du boîtier (6) vu en coupe de l'admission (7) et de l'évacuation (8).

4. Dispositif conforme à l'une des revendications 1 à 3, **caractérisé par** une courbure du conduit d'évacuation (8b) au niveau de sa partie rectiligne ou sensiblement rectiligne dont l'angle de courbure est inférieur à 30 °, de préférence inférieur à 15 °, mesuré entre l'axe central du début de la partie rectiligne ou sensiblement rectiligne du conduit d'évacuation (8b) et l'axe central de la fin de la partie rectiligne ou sensiblement rectiligne du conduit d'évacuation (8b).

5. Dispositif conforme à l'une des revendications 1 à 4, **caractérisé par** la section constante du conduit d'évacuation (8b) sur la longueur de sa partie rectiligne ou sensiblement rectiligne.

6. Dispositif conforme à l'une des revendications 1 à 4, **caractérisé par** une ou plusieurs modifications de section du conduit d'évacuation (8b) sur la longueur de sa partie rectiligne ou sensiblement rectiligne, les élargissements ou rétrécissements de la section présentant chacun un angle d'ouverture inférieur à 15 ° par rapport à l'axe central du conduit d'évacuation (8b) à cet endroit.

7. Dispositif conforme à l'une des revendications 1 à 6, **caractérisé en ce que** la longueur de la partie rectiligne ou sensiblement rectiligne du conduit d'évacuation (8b) est égale à au moins dix fois le diamètre local du conduit d'évacuation (8b).
